# EUROPÄISCHE PATENTANMELDUNG

(11) **EP 4 793 461 A1**
(43) Veröffentlichungstag der Anmeldung: **19.08.2026**
(21) Anmeldenummer: 26154101.5
(22) Anmeldetag: 26.01.2026
(51) Int. Cl.: F01D 5/02, F04D 29/66, F16F 15/34

(54) **AUSWUCHTVORRICHTUNG FÜR EINEN ROTOR**

(30) Priorität: 13.02.2025 DE 102025105435
(71) Anmelder: Rolls-Royce Deutschland Ltd & Co KG, 15827 Blankenfelde-Mahlow (DE)
(72) Erfinder: TURCU, Artur, 15827 Blankenfelde-Mahlow (DE)

(57) **Zusammenfassung**

Die Offenbarung betrifft eine Auswuchtvorrichtung (10) für einen Rotor (100), umfassend einen konzentrisch zu einer Rotationsachse (AR) des Rotors (100) angeordneten Aufnahmekörper (12) mit einer Mehrzahl an um die Rotationsachse (AR) verteilten Aufnahmeöffnungen (14), und mindestens einen Wuchtkörper (20), der sich entlang einer Körperlängsachse (AKL) erstreckt und zumindest abschnittsweise zylindrisch und zur Aufnahme in eine der Aufnahmeöffnungen (14) ausgebildet ist. Es ist vorgesehen, dass der Wuchtkörper (20) eine sich parallel zu der Körperlängsachse (AKL) erstreckende, den Wuchtkörper (20) teilweise unterbrechende Schlitzung (24) aufweist.

## Beschreibung

Die Offenbarung betrifft eine Auswuchtvorrichtung für einen Rotor. Auswuchtvorrichtung für Rotoren, insbesondere bei Kraftmaschinen oder Arbeitsmaschinen, sind allgemein bekannt.

US10544679B2 offenbart eine gattungsgemäße Auswuchtvorrichtung.

Auswuchtvorrichtungen stellen einen Rundlauf bei rotierenden Vorrichtungen, insbesondere Maschinen, sicher, indem sie gezielt Unwuchten, welche beispielsweise durch Montage- und/oder Fertigungstoleranzen entstehen, kompensieren. Hierzu können durch die Auswuchtvorrichtung insbesondere gezielt Masseveränderungen hervorgerufen werden, zum Beispiel durch das Hinzufügen oder Entfernen von Gewicht an bestimmten Positionen des Rotors. Generell ist es bei Auswuchtvorrichtungen wichtig, dass diese während des Betriebs sicher angebracht sind, d. h. die Auswuchtvorrichtung und/oder einzelne Wuchtkörper der Auswuchtvorrichtung sich nicht unkontrolliert aus ihrer Aufnahme bewegen. Des Weiteren ist es wünschenswert, einen Montageaufwand während des Auswuchtvorgangs möglichst gering zu halten.

Auswuchtvorrichtungen sind noch verbesserungswürdig hinsichtlich eines oder mehrerer der oben genannten Aspekte.

An dieser Stelle setzt die vorliegende Offenbarung an. Die Offenbarung schlägt in einem ersten Aspekt eine Auswuchtvorrichtung vor. Die Offenbarung geht aus von einer Auswuchtvorrichtung für einen Rotor, umfassend einen konzentrisch zu einer Rotationsachse des Rotors angeordneten Aufnahmekörper mit einer Mehrzahl an um die Rotationsachse verteilten Aufnahmeöffnungen, und mindestens einen Wuchtkörper, der sich entlang einer Körperlängsachse erstreckt und zumindest abschnittsweise zylindrisch und zur Aufnahme in eine der Aufnahmeöffnungen ausgebildet ist.

Gemäß der Offenbarung ist vorgesehen, dass der Wuchtkörper eine sich parallel zu der Körperlängsachse erstreckende, den Wuchtkörper teilweise unterbrechende Schlitzung aufweist.

Die Offenbarung basiert auf der Erkenntnis, dass für eine Auswuchtvorrichtung, insbesondere mit diskreten Wuchtkörpern, sowohl ein sicherer Sitz der Wuchtkörper während des Betriebs, als auch eine gute Zugänglichkeit bzw. ein geringer Montageaufwand beim Anbringen jener Wuchtkörper wichtig ist. Indem der Wuchtkörper eine sich entlang der Körperlängsachse erstreckende Schlitzung aufweist, kann in kontrollierter Weise eine elastische Verformbarkeit, insbesondere senkrecht zur Körperlängsachse und/oder radial nach Innen gerichtet, erreicht werden. Mittels einer elastischen Verformbarkeit kann sowohl ein Einschieben des Wuchtkörper in eine Aufnahmeöffnung, als auch ein anschließendes sicheres Halten des Wuchtkörpers in der Aufnahmeöffnung, ermöglicht werden. Die Schlitzung ist insbesondere bei vorgegebener Größe und Form des Wuchtkörpers und der Aufnahmeöffnung derart dimensioniert, dass ein gewünschter Kraftschluss, d. h. eine definierte Haltekraft, zwischen dem Wuchtkörper und der Aufnahmeöffnung entsteht. Durch das Einsetzen des Wuchtkörper in die Aufnahmeöffnung und insbesondere die radial nach Innen gerichtete elastische Verformung des Wuchtkörpers entsteht eine radial gegen die Aufnahmeöffnung wirkende Haltekraft. Durch einen derartigen Kraftschluss kann vorteilhaft die Abhängigkeit von anderen Sicherungsmitteln, beispielsweise formschlüssigen Sicherungsmitteln, wie zum Beispiel Wellenmuttern, Bolzen, Sicherungsringen etc., verringert werden. Auf diese Weise können vorteilhaft zusätzliche Montageschritte, Bauraum und/oder Gewicht eingespart werden. Auch können Kosten gespart werden, da auf zusätzliche Befestigungselemente wie Bolzen, Schrauben und/oder Muttern verzichtet werden kann.

Vorteilhafte Weiterbildungen sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

In einer Weiterbildung der Offenbarung ist vorgesehen, dass sich die Schlitzung in Richtung einer Körperquerachse, senkrecht zur Körperlängsachse, vollständig durch den Wuchtkörper erstreckt. Dies bedeutet insbesondere, dass die Schlitzung den Wuchtkörper vollständig durchdringt, und zwar in einer Richtung entlang der Körperquerachse, d. h. quer zur Körperlängsachse. Hierdurch wird vorteilhaft eine höhere Elastizität, d. h. elastische Verformbarkeit, des Wuchtkörpers erreicht.

Die Offenbarung kann dadurch weitergebildet werden, dass der Wuchtkörper an mindestens einem, in Richtung der Körperlängsachse gesehenen Ende der Schlitzung eine Aufweitung, insbesondere eine sich parallel zur Körperquerachse erstreckende Bohrung, aufweist. Dies bedeutet besondere, dass ein oder beide in Körperlängsachse gesehenen Enden der Schlitzung eine zusätzliche Entfernung von Material, aufweist. Auf diese Weise können scharfe Kanten und damit einhergehende Spannungsspitzen, vorteilhaft vermieden werden. Auch kann durch eine der Aufweitung zusätzlicher Bewegungsraum für das Material des Wuchtkörpers bereitgestellt werden, um so die Elastizität zu verbessern.

In einer Weiterbildung der Offenbarung ist vorgesehen, dass der Wuchtkörper eine sich entlang der Körperlängsachse erstreckende Öffnung, insbesondere Bohrung, aufweist, die sich vollständig durch den Wuchtkörper erstreckt. Mit anderen Worten, kann der Wuchtkörper innen hohl ausgebildet sein, und zwar mit einem sich entlang der Körperlängsachse erstreckenden Hohlraum. Mittels einer derartigen Öffnung kann die Elastizität des Wuchtkörpers, insbesondere zur Einstellung einer definierten Haltekraft, verbessert werden. Der Wuchtkörper kann praktisch als Hohlzylinder ausgebildet sein. In Weiterbildungen kann die Öffnung einen Gewindeabschnitt aufweisen.

Die Offenbarung kann dadurch weitergebildet werden, dass an einer Austrittskante der Schlitzung eine Abflachung angeordnet ist. Dies kann bedeuten, dass an der Stelle, an der die Schlitzung an die äußere Oberfläche des Wuchtkörpers tritt, die Oberfläche des Wuchtkörpers von ihrer, insbesondere zylindrischen, Grundform abweicht. Insbesondere ist an der Austrittskante der Wuchtkörper derart verkleinert bzw. abgeflacht, dass sich ein Plateau ausbildet. Durch die Abflachung kann gezielt Bewegungsraum für den Wuchtkörper innerhalb der Aufnahmeöffnung erzeugt werden, um mechanische Spannungsspitzen, z.B. bei der thermischen Ausdehnung, zu verringern und/oder die Montage zu vereinfachen.

In einer Weiterbildung der Offenbarung ist vorgesehen, dass der Wuchtkörper an mindestens einer Stirnseite eine Fase aufweist, und/oder die mindestens eine Aufnahmeöffnung an einem Eintritt eine Aufnahmefase aufweist. Durch eine derartige Fase am Wuchtkörper und/oder eine Aufnahmefase an der Aufnahmeöffnung kann vorteilhaft ein Einschieben des Wuchtkörpers in die Aufnahmeöffnung vereinfacht werden. Außerdem können durch das Vermeiden von scharfen Kanten mechanische Spannungsspitzen im Material, sowie eine Verletzungsgefahr bei der Montage oder Demontage verringert werden.

Die Offenbarung kann dadurch weitergebildet werden, dass der Wuchtkörper mittels einer Presspassung oder einer Übergangspassung in der Aufnahmeöffnung aufgenommen ist. Die Herstellung einer Presspassung oder Übergangspassung kann vorteilhaft thermisch unterstützt werden, indem vor einem Einführen des Wuchtkörpers in die Aufnahmeöffnung der Wuchtkörper abgekühlt, und/oder der Aufnahmekörper erwärmt wird. Auf diese Weise kann, unter Berücksichtigung der unterschiedlichen Wärmeausdehnungskoeffizienten von Aufnahmekörper und Wuchtkörper, temporär für die vereinfachte Montage eine Spielpassung erzeugt werden, welche in einem Endzustand, d. h. nach Abklingen der aufgeprägten Temperaturveränderung, in die gewünschte Übergangspassung oder Presspassung übergeht.

In einer Weiterbildung der Offenbarung ist vorgesehen, dass die Aufnahmeöffnung eine Durchgangsöffnung ist und/oder einen ausreichenden Ausdehnungsraum aufweist, um eine axiale Ausdehnung des Wuchtkörpers zu ermöglichen. **In** einer derartigen Weiterbildung ist vorteilhaft ausreichend Raum für den Wuchtkörper in Richtung der Körperlängsachse vorhanden, um sich in diese Richtung auszudehnen. Bei Weiterbildungen, in denen die Aufnahmeöffnung eine Durchgangsöffnung ist, kann der Wuchtkörper vorteilhaft axial mittig mit dem Aufnahmekörper angeordnet sein. Der Aufnahmekörper und der mindestens eine Wuchtkörper können vorteilhaft symmetrisch in Bezug auf eine axiale Ebene angeordnet sein.

Die Offenbarung kann dadurch weitergebildet werden, dass die Aufnahmeöffnung und/oder die Körperlängsachse parallel zur Rotationsachse angeordnet ist.

In einer Weiterbildung der Offenbarung ist vorgesehen, dass der Wuchtkörper aus einem ersten Material und der Aufnahmekörper aus einem zweiten Material hergestellt ist. Insbesondere kann das erste Material einen höheren Wärmeausdehnungskoeffizienten als das zweite Material aufweisen. Durch die unterschiedlich gestalteten Wärmeausdehnungskoeffizienten kann die Montage der Wuchtkörper verbessert werden, indem auf den Aufnahmekörper und/oder den Wuchtkörper vor der Montage eine Temperaturänderung aufgeprägt wird, die eine Beweglichkeit des Wuchtkörpers innerhalb der Aufnahmeöffnung ermöglicht. Nach Abklingen dieser aufgeprägten Temperaturänderung stellt sich durch die jeweiligen Wärmeausdehnungskoeffizienten ein Kraftschluss, d. h. eine Haltekraft zwischen Wuchtkörper und Aufnahmekörper, ein, der unter Betriebsbedingungen (insbesondere in einem zu erwartenden Temperaturbereich) eine ausreichende Befestigung der Wuchtkörper sicherstellt.

Die Offenbarung kann dadurch weitergebildet werden, dass das erste Material Aluminium, Stahl oder eine Nickellegierung ist oder aufweist, und/oder das zweite Material Aluminium, Stahl, eine Nickellegierung oder Titan ist oder aufweist.

Die Offenbarung schlägt in einem zweiten Aspekt einen Rotor für eine Maschine vor, aufweisend eine Auswuchtvorrichtung gemäß dem ersten Aspekt der Offenbarung. Die Maschine kann insbesondere eine Kraftmaschine, zum Beispiel eine Verbrennungskraftmaschine oder ein Gasturbinentriebwerk, oder eine Arbeitsmaschine sein.

Die Offenbarung schlägt in einem dritten Aspekt eine Maschine vor, insbesondere Kraftmaschine, zum Beispiel Verbrennungskraftmaschine oder Gasturbinentriebwerk, oder Arbeitsmaschine, aufweisend einen Rotor dem zweiten Aspekt und/oder eine Auswuchtvorrichtung gemäß dem ersten Aspekt.

Es soll verstanden werden, dass die Auswuchtvorrichtung gemäß dem ersten Aspekt der Erfindung, der Rotor gemäß dem zweiten Aspekt der Erfindung und die Maschine gemäß dem dritten Aspekt der Erfindung gleiche und ähnliche Unteraspekte aufweisen, wie sie insbesondere in den abhängigen Ansprüchen niedergelegt sind. Insofern wird für die Weiterbildung eines Aspekts der Erfindung auch auf die Weiterbildungen der anderen Aspekte der Erfindung verwiesen.

Ausführungsformen der Offenbarung werden nun nachfolgend anhand der Zeichnung im Vergleich zum Stand der Technik, welcher zum Teil ebenfalls dargestellt ist, beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen.

Dabei ist zu berücksichtigen, dass vielfältige Modifikationen und Änderungen betreffend die Form und das Detail einer Ausführungsform vorgenommen werden können, ohne von der allgemeinen Idee der Offenbarung abzuweichen. Die in der Beschreibung, in der Zeichnung sowie in den Ansprüchen offenbarten Merkmale der Offenbarung können sowohl einzeln als auch in beliebiger Kombination für die Weiterbildung der Offenbarung wesentlich sein. Zudem fallen in den Rahmen der Offenbarung alle Kombinationen aus zumindest zwei der in der Beschreibung, der Zeichnung und/oder den Ansprüchen offenbarten Merkmale. Die allgemeine Idee der Offenbarung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Weitere Vorteile, Merkmale und Einzelheiten der Offenbarung ergeben sich aus der nachfolgenden Beschreibung der bevorzugten Ausführungsformen sowie anhand der Zeichnung; diese zeigt in:
- Fig. 1: ausschnittsweise, perspektivische Ansicht eines Rotors mit einer Auswuchtvorrichtung gemäß dem Konzept der Offenbarung,
- Fig. 2: Detailansicht eines Wuchtkörpers der in Fig. 2 gezeigten Auswuchtvorrichtung, wobei der Wuchtkörper in einer Aufnahmeöffnung aufgenommen ist,
- Fig. 3: Draufsicht eines einzelnen Wuchtkörpers,
- Fig. 4a: perspektivische Ansicht des in Fig. 3 gezeigten Wuchtkörpers,
- Fig. 4b: Schnittansicht des in Fig. 3 und Fig. 4A gezeigten Wuchtkörpers in einer axialen Schnittebene,
- Fig. 5: schematische Ansicht eines Gasturbinentriebwerks, aufweisend eine Auswuchtvorrichtung gemäß dem Konzept der Offenbarung.

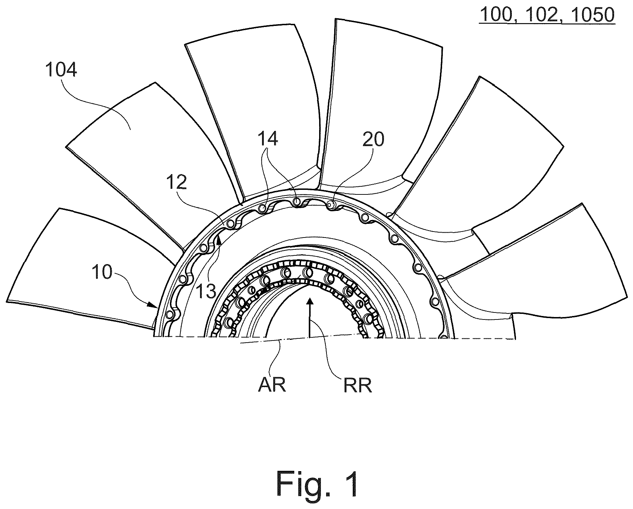

Fig. 1 zeigt eine perspektivische Ansicht eines Rotors 100, wobei zur besseren Übersicht lediglich ein Ausschnitt, nämlich ungefähr die Hälfte des Umfangs des Rotors 100 gezeigt ist. Der Rotor 100 ist vorliegend als integral ausgebildeter BLISK-Rotor 102, z.B. einer Verdichterstufe 1050 eine Hochdruckverdichters 160, mit einer Anzahl von äquidistant über den Umfang angeordneten und integral angeformten Rotorschaufeln 104, ausgebildet. An den Rotor 100 ist vorliegend ein Aufnahmekörper 12 einer Auswuchtvorrichtung 10 integral angeformt. In anderen Ausführungsformen der Offenbarung ist es gleichwohl möglich, dass die Auswuchtvorrichtung 10 und/oder der Aufnahmekörper 12 als separates Teil ausgebildet ist, welches mit dem Rotor 100 über geeignete Befestigungsmittel verbunden werden kann. Der Aufnahmekörper 12 weist eine Anzahl von Aufnahmeöffnungen 14 auf, welches vorliegend äquidistant über den Umfang des Rotors 100 bzw. des Aufnahmekörpers 12 verteilt sind und sich jeweils parallel zu einer Rotationsachse AR des Rotors 100 durch den Aufnahmekörper 12 erstrecken. Der Aufnahmekörper 12 weist in gewichtssparender Weise in einem Bereich zwischen zwei benachbarten Aufnahmeöffnungen 14 radiale Ausnahmen 13 auf, d. h. eine Verjüngung oder Verschlankung des Querschnitts in einer radialen Richtung RR. Beispielhaft ist ein Wuchtkörper 20 dargestellt, welcher in eine Aufnahmeöffnung 14 eingesetzt ist.

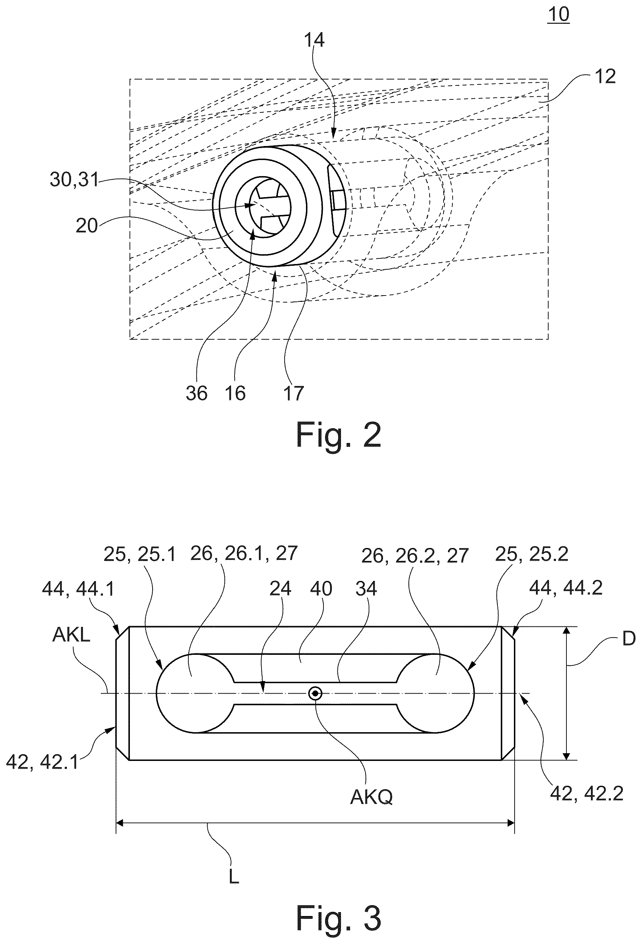

Der Wuchtkörper 20 ist in seiner Einbausituation in der Aufnahmeöffnung 14 in Fig. 2 im Detail dargestellt. Vorliegend ist sichtbar, dass der Wuchtkörper 20 eine Öffnung 30 in Form einer zylindrischen Bohrung 31 aufweist. Weiterhin ist sichtbar, dass die Aufnahmeöffnung 14 an einem Eintritt 16 eine Aufnahmefase 17 aufweist, welche insbesondere ein Einsetzen des Wuchtkörpers 20 erleichtert. Die Öffnung 30 bzw. die zylindrische Bohrung 31 kann in optionalen Ausführungsformen einen Gewindeabschnitt 36 aufweisen. Dies bedeutet, dass sich zumindest abschnittsweise ein Gewinde über die innere Oberfläche der Öffnung erstreckt, die mit einem korrespondierenden Außengewinde eines hier nicht dargestellten Entnahmewerkzeugs in Eingriff gebracht werden kann. Auf diese Weise kann effektiv eine Zugkraft auf den Wuchtkörper 20 appliziert werden, um diesen aus der Aufnahmeöffnung 14 herauszuziehen. Gleichwohl kann ein derartiges Werkzeug auch zur weiteren Handhabung, zum Beispiel dem Einsetzen der Wuchtkörper 20 in die Aufnahmeöffnung 14, verwendet werden.

In Fig. 3 ist der Wuchtkörper aus Fig. 2 einzeln und in einer Draufsicht dargestellt. Der Wuchtkörper 20 weist an seinen Stirnseiten 42 jeweils eine Fase 44, nämlich an einer ersten Stirnseite 42.1 eine erste Fase 44.1 und an einer zweiten Stirnseite 42.2 eine zweite Fase 44.2 auf. Durch eine derartige Fase 44 kann ein Einsetzen des Wuchtkörpers 20 in eine Aufnahmeöffnung 14 vorteilhaft vereinfacht werden. Der Wuchtkörper 20 hat eine längliche Form. Vorliegend beträgt eine Länge L des Wuchtkörpers 20 ungefähr das Zweifache bis Dreifache eines Durchmessers D des Wuchtkörpers 20.

Eine Schlitzung 24 erstreckt sich entlang einer Körperlängsachse AKL des Wuchtkörpers 24. In Richtung einer senkrecht zur Zeichenebene verlaufenen Körperquerachse AKQ erstreckt sich die Schlitzung 24 vollständig durch den Wuchtkörper 20 in Richtung der Körperlängsachse AKL erstreckt sich die Schlitzung 24 hingegen nicht vollständig durch den Wuchtkörper 20, sondern von einem, im Bereich der ersten Stirnseite 42.1 angeordneten ersten Ende 25.1 der Schlitzung 24 zu einem, im Bereich der zweiten Stirnseite 42.2 angeordneten zweiten Ende 25.2. Durch diese jeweils zwischen der ersten Stirnseite 42.1 und dem ersten Ende 25.1, und dem zweiten Ende 25.2 und der zweiten Stirnseite 42.2 verbliebenen Materialabschnitte bildet der Wuchtkörper 20 somit einen in der Zeichenebene geschlossenen, sich um die Schlitzung 24 erstreckenden Querschnitt, der insbesondere in einer Richtung senkrecht zur Körperlängsachse AKL und senkrecht zur Körperquerachse AKQ gute elastische Eigenschaften aufweist.

Die Schlitzung 24 weist an seinen Enden 25 jeweils eine Aufweitung 26 in Form einer Bohrung 27 auf. An seinem ersten Ende 25.1 weist die Schlitzung 24 eine erste Aufweitung 26.1, und an seinem zweiten Ende 25.2 eine zweite Aufweitung 26.2 auf. Neben der hier gezeigten Bohrungen 27 mit zylindrischer Form kann die Aufweitung 26 in anderen Ausführungsformen andere Formen aufweisen, zum Beispiel elliptische oder polygonale, wobei Letztere bevorzugt mit abgerundeten Kanten ausgebildet sein können.

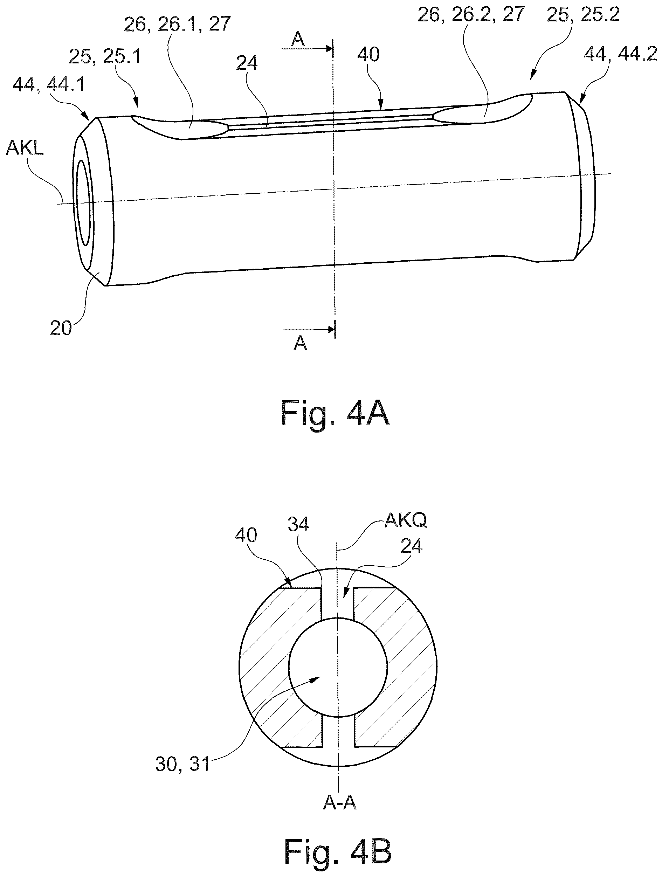

In Fig. 4A ist der in Fig. 2 und Fig. 3 gezeigte Wuchtkörper 20 in einer weiteren, perspektivischen Einzeldarstellung gezeigt. Hier ist insbesondere eine Abflachung 40 erkennbar, die sich an einer Austrittskante 34 entlang der Schlitzung 24 erstreckt und ein Plateau ausbildet. Die Abflachung 40 ist im Wesentlichen eine lokale Veränderung der - im vorliegenden Fall zylindrischen - Sollgeometrie des Wuchtkörpers 20, indem das Volumen des Wuchtkörpers 20 an der Stelle, an der die Schlitzung 24 an die Außenoberfläche des Wuchtkörpers 20 tritt, reduziert wird. Hierdurch wird vorteilhaft ein freies Puffervolumen zwischen Aufnahmeöffnung 14 und Wuchtkörper 20 bereitgestellt, wodurch mechanische Spannungsspitzen, welche insbesondere den Aufnahmekörper 12 belasten könnten, reduziert werden können.

In Fig. 4B ist der in Fig. 4A gezeigte Wuchtkörper 20 in einer Schnittansicht dargestellt, wobei die Schnittebene senkrecht zur Körperlängsachse AKL angeordnet ist. Die Schnittebene A-A ist in Fig. 4 A eingezeichnet.

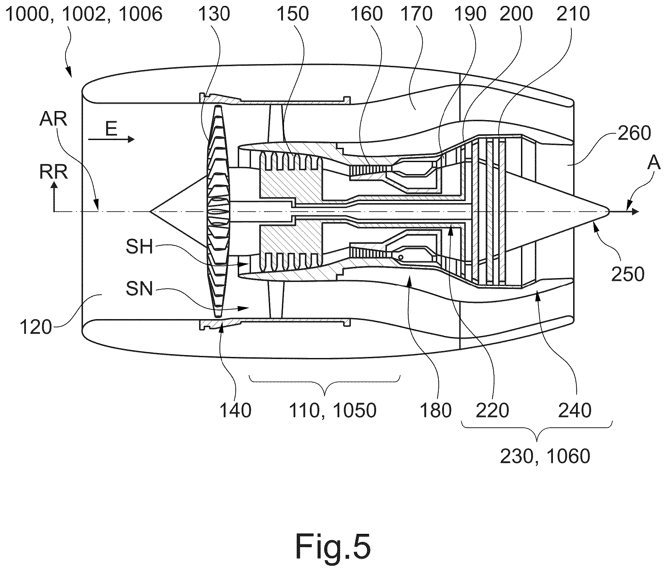

Fig. 5 zeigt schematisch und in einer Schnittdarstellung ein Gasturbinentriebwerk 1000. Entlang einer Triebwerkslängsachse A des Gasturbinentriebwerks 1000, die vorliegend der Rotationsachse AR entspricht, sind Triebwerkskomponenten hintereinander angeordnet. Am Einlass 120 wird mittels eines Fans 130 entlang einer Eintrittsrichtung E Luft angesaugt. Dieser Fan 130 ist in einem Fangehäuse 140 angeordnet und wird von einer Niederdruckturbine 210 einer Turbine 230 über eine Rotorwelle 220 angetrieben. Die Turbine 230 umfasst mindestens eine Turbinenstufe 1060, und schließt sich an einen Verdichter 110 an, der mindestens einen Hochdruckverdichter 160 sowie gegebenenfalls, wie hier gezeigt, noch einen Niederdruckverdichter 150 und/oder einen Mitteldruckverdichter aufweist. Der Verdichter 110, bzw. jeweils der Hochdruckverdichter 160 und der Niederdruckverdichter 150, weist mindestens eine Verdichterstufe 1050 auf. Zur Schuberzeugung versorgt der Fan 130 den Niederdruckverdichter 150 und den Hochdruckverdichter 160 sowie einen Bypasskanal 170 mit Luft. Somit entsteht ein Hauptstrom SH, der durch den Kern der Gasturbine 1000 verläuft, und ein Nebenstrom SN der durch den Bypasskanal 170 verläuft. Die im Verdichter 150, 160 komprimierte Luft wird in der Brennkammer 180 mit Brennstoff vermischt und verbrannt. Mit dem erzeugten Heißgas wird die Turbine 230, welche mindestens eine Hochdruckturbine 190, gegebenenfalls wie hier gezeigt, eine Mitteldruckturbine 200 und gegebenenfalls noch eine Niederdruckturbine 210 umfassen kann, angetrieben. Die bei der Verbrennung freiwerdende Energie wird von der Turbine 230 zum Antreiben des Verdichters 110 und des Fans 130 genutzt, um dann über die in den Bypasskanal 170 geförderte Luft den erforderlichen Schub zu erzeugen. Sowohl der Nebenstrom SN aus dem Bypasskanal 170 als auch der Hauptstrom SH strömen über einen Auslass 260 hinaus. Der Auslass 260 weist hierbei üblicherweise eine Schubdüse mit einem zentral angeordneten Austrittskonus 250 auf. Zur Lärmminderung befindet sich im Bereich des Auslasses ein Mischer als Teil einer Mischergruppe 240. Durch die besondere Kontur des Mischers werden der Hauptstrom aus dem Kernstrom und der Nebenstrom aus dem Bypasskanal 170 der Gasturbine 1000 so abgelenkt und vermischt, dass die dabei entstehenden Verwirbelungen das hörbare Lärmniveau absenken. Auch bei abweichend ausgestalteten Gasturbinen kann die vorgeschlagene Lösung Anwendung finden, beispielsweise bei einer beliebigen Art Gasturbinentriebwerk wie zum Beispiel bei einem Open-Rotor oder einem Turboprop-Triebwerk oder einem Getriebe-Fan, oder stationären Gasturbinen oder anderen rotierenden Maschinen.

### Liste der Bezugszeichen (Teil der Beschreibung)

- 10: Auswuchtvorrichtung
- 12: Aufnahmekörper
- 13: radiale Ausnahme des Aufnahmekörpers
- 14: Aufnahmeöffnung
- 16: Eintritt der Aufnahmeöffnung
- 17: Aufnahmefase
- 20: Wuchtkörper
- 24: Schlitzung
- 25: Ende der Schlitzung, in Richtung der Körperlängsachse gesehenes Ende der Schlitzung
- 26: Aufweitung
- 26.1, 26.2: erste, zweite Aufweitung
- 27: Bohrung
- 30: Öffnung
- 31: zylindrische Öffnung, Bohrung
- 34: Austrittskante
- 36: Gewindeabschnitt
- 40: Abflachung
- 42: Stirnseite
- 42.1, 42.2: erste, zweite Stirnseite
- 44: Fase
- 44.1, 44.2: erste, zweite Fase
- 100: Rotor
- 102: BLISK-Rotor
- 104: Rotorschaufel
- 110: Verdichter
- 120: Einlass
- 130: Fan
- 140: Fangehäuse
- 150: Niederdruckverdichter
- 160: Hochdruckverdichter
- 170: Bypasskanal
- 180: Brennkammer
- 190: Hochdruckturbine
- 200: Mitteldruckturbine
- 210: Niederdruckturbine
- 220: Rotorwelle
- 230: Turbine
- 240: Mischergruppe
- 250: Austrittskonus
- 260: Auslass
- 1000: Maschine
- 1002: Kraftmaschine
- 1004: Verbrennungskraftmaschine
- 1006: Gasturbinentriebwerk
- 1008: Arbeitsmaschine
- 1050: Verdichterstufe
- 1060: Turbinenstufe

- A: Triebswerkslängsachse
- AKL: Körperlängsachse
- AKQ: Körperquerachse
- AR: Rotationsachse
- D: Durchmesser des Wuchtkörpers
- E: Eintrittsrichtung
- L: Länge des Wuchtkörpers
- RR: radiale Richtung
- SH: Hauptstrom
- SN: Nebenstrom

## Patentansprüche

1. Auswuchtvorrichtung (10) für einen Rotor (100), umfassend:
- einen konzentrisch zu einer Rotationsachse (AR) des Rotors (100) angeordneten Aufnahmekörper (12) mit einer Mehrzahl an um die Rotationsachse (AR) verteilten Aufnahmeöffnungen (14), und
- mindestens einen Wuchtkörper (20), der sich entlang einer Körperlängsachse (AKL) erstreckt und zumindest abschnittsweise zylindrisch und zur Aufnahme in eine der Aufnahmeöffnungen (14) ausgebildet ist,
**dadurch gekennzeichnet, dass**
- der Wuchtkörper (20) eine sich parallel zu der Körperlängsachse (AKL) erstreckende, den Wuchtkörper (20) teilweise unterbrechende Schlitzung (24) aufweist.

2. Auswuchtvorrichtung (10) gemäß Anspruch 1, **dadurch gekennzeichnet, dass** sich die Schlitzung (24) in Richtung einer Körperquerachse (AKQ), senkrecht zur Körperlängsachse (AKL), vollständig durch den Wuchtkörper (20) erstreckt.

3. Auswuchtvorrichtung (10) gemäß Anspruch 1 oder 2, **dadurch gekennzeichnet, dass** der Wuchtkörper (20) an mindestens einem, in Richtung der Körperlängsachse (AKL) gesehenen Ende (25) der Schlitzung (24) eine Aufweitung (26, 26.1, 26.2), insbesondere eine sich parallel zur Körperquerachse (AKQ) erstreckende Bohrung (27), aufweist.

4. Auswuchtvorrichtung (10) gemäß einem der vorherigen Ansprüche, **dadurch gekennzeichnet, dass** der Wuchtkörper (20) eine sich entlang der Körperlängsachse (AKL) erstreckende Öffnung (30), insbesondere Bohrung (31), aufweist, die sich vollständig durch den Wuchtkörper (20) erstreckt.

5. Auswuchtvorrichtung (10) gemäß einem der vorherigen Ansprüche, **dadurch gekennzeichnet, dass** an einer Austrittskante (34) der Schlitzung (20) eine Abflachung (40) angeordnet ist.

6. Auswuchtvorrichtung (10) gemäß einem der vorherigen Ansprüche, **dadurch gekennzeichnet, dass**
- der Wuchtkörper (20) an mindestens einer Stirnseite (42, 42.1, 42.2) eine Fase (44, 44.1, 44.2) aufweist, und/oder
- die mindestens eine Aufnahmeöffnung (14) an einem Eintritt (16) eine Aufnahmefase (17) aufweist.

7. Auswuchtvorrichtung (10) gemäß einem der vorherigen Ansprüche, **dadurch gekennzeichnet, dass** der Wuchtkörper (20) mittels einer Presspassung oder einer Übergangspassung in der Aufnahmeöffnung (14) aufgenommen ist.

8. Auswuchtvorrichtung (10) gemäß einem der vorherigen Ansprüche, **dadurch gekennzeichnet, dass** die Aufnahmeöffnung (14) eine Durchgangsöffnung ist und/oder einen ausreichenden Ausdehnungsraum aufweist, um eine axiale Ausdehnung des Wuchtkörpers (20) zu ermöglichen.

9. Auswuchtvorrichtung (10) gemäß einem der vorherigen Ansprüche, **dadurch gekennzeichnet, dass** die Aufnahmeöffnung (14) und/oder die Körperlängsachse (AKL) parallel zur Rotationsachse (AR) angeordnet ist.

10. Auswuchtvorrichtung (10) gemäß einem der vorherigen Ansprüche, **dadurch gekennzeichnet, dass** der Wuchtkörper (20) aus einem ersten Material und der Aufnahmekörper (12) aus einem zweiten Material hergestellt ist, wobei das erste Material einen höheren Wärmeausdehnungskoeffizienten aufweist als das zweite Material.

11. Auswuchtvorrichtung (10) gemäß einem der vorherigen Ansprüche, **dadurch gekennzeichnet, dass**
- das erste Material Aluminium, Stahl oder eine Nickellegierung ist oder aufweist, und/oder
- das zweite Material Aluminium, Stahl, eine Nickellegierung oder Titan ist oder aufweist.

12. Rotor (100) für eine Maschine (1000), insbesondere Kraftmaschine (1002), zum Beispiel Verbrennungskraftmaschine (1004) oder Gasturbinentriebwerk (1006), oder Arbeitsmaschine (1008), aufweisend eine Auswuchtvorrichtung (10) gemäß einem der vorherigen Ansprüche.

13. Maschine (1000), insbesondere Kraftmaschine (1002), zum Beispiel Verbrennungskraftmaschine (1004) oder Gasturbinentriebwerk (1006), oder Arbeitsmaschine (1008), aufweisend einen Rotor gemäß Anspruch 12.
